# EUROPÄISCHE PATENTSCHRIFT

(11) **EP 0 400 375 B1**
(45) Veröffentlichungstag und Bekanntmachung des Hinweises auf die Patenterteilung: **03.03.1993**
(21) Anmeldenummer: 90108880.7
(22) Anmeldetag: 11.05.1990
(51) Int. Cl.: D06C 3/02

(54) **Rollenkette**
Tenter chain
Chaîne de rame

(30) Priorität: 23.05.1989 DE 3916714
(43) Veröffentlichungstag der Anmeldung: 05.12.1990
(73) Patentinhaber: A. Monforts GmbH & Co, D-41006 Mönchengladbach (DE)
(72) Erfinder: Röntgen, Manfred, D-4050 Mönchengladbach 1 (DE)
(74) Vertreter: von Creytz, Dietrich, Dipl.-Phys.

(56) Entgegenhaltungen:
- EP-A- 0 289 728
- DE-A- 3 333 938
- DE-A- 3 744 013

## Beschreibung

Die Erfindung betrifft eine Rollenkette zum kontinuierlichen Führen und/oder Breitstrecken einer textilen Stoffbahn in einer Stoffbahnspannmaschine mit verbunden über Kettengelenke abwechselnd aufeinanderfolgenden Innen- und Außengliedern, wobei jedes Innenglied aus zwei Innenlaschen sowie zwei die Laschen miteinander verbindenden Hülsen und jedes Außenglied aus zwei Außenlaschen sowie zwei die Außenlaschen miteinander verbindenden Bolzen besteht wobei jede Hülse drehbar auf dem zugehörigen Bolzen gelagert ist und wobei außen auf der Hülse eine Laufrolle in einem über einen Schmierkanal von außen zu schmierenden Kugellager drehbar gelagert ist.

Eine solche Transportkette für eine Stoffbahnspannmaschine wird in dem DE-GM 17 09 404 und in der DE-OS 33 33 938 beschrieben. Die Kette läuft in Längsrichtung der Maschine durch verschiedene mehr oder weniger hoch aufgeheizte Behandlungsfelder, in denen Temperaturen bis um etwa 300° C herrschen können. An den Längsenden der Maschine wird die Kette über Kettenräder, mit vertikaler oder horizontaler Achse umgelenkt und endlos zurückgeführt. Die unmittelbar auf den Bolzen gelagerten Hülsen dienen lediglich dazu, die Kräfte in Laufrichtung (Bewegungsrichtung) der Kette zu übertragen. Bei Betrieb wirkt auf die Rollenkette innerhalb der Behandlungsfelder eine Kraft quer zur Bewegungsrichtung. In der Maschine wird nämlich die zu behandelnde Stoffbahn beiderseits an den Längsrändern mit Hilfe von an der Rollenkette befestigten Kluppen oder Nadeln gehalten. Zum Aufnehmen und Übertragen der entsprechenden horizontalen Spannkräfte - also zum Ausführen der eigentlichen Aufgabe der Rollenkette - wird auf der Hülse eine Laufrolle in je einem Kugellager drehbar gelagert.

Die Kugellager der Kettenglieder von Spannrahmenketten werden nach dem Stand der Technik vom Innern des jeweiligen Bolzens her geschmiert. Zu diesem Zweck wird in jeden Kettenbolzen eine axiale Längsbohrung mit einem radialen Abzweig zum Kugellager vorgesehen. Der Innenring des Kugellagers besitzt an einer Stelle eine Öffnung, die beim Schmieren mit dem genannten radialen Abzweig zur Deckung gebracht werden muß. Außerdem befindet sich zwischen Bolzen und Innenring des Kugellagers eine die Beweglichkeit der Kette an den Kettenrädern garantierende Gleitbuchse, z. B. aus Polytetrafluorethylen, die ebenfalls eine mit dem radialen Durchgang zur Deckung zu bringende Bohrung besitzen muß.

In der Praxis werden die Buchse, die Hülse und der Bolzen so montiert, daß sie sich normalerweise nicht gegeneinander verdrehen und die radialen Schmierbohrungen von Bolzen, Buchse und Hülse zur Deckung gebracht bleiben, also miteinander fluchten. Die dazu erforderliche Konstruktion - an jedem Kettenglied (!) - ist aufwendig, trotzdem besteht die Gefahr, daß sich die Buchse wegen der hohen Längskräfte bei der Kettenumlenkung doch relativ zu Bolzen bzw. Hülse verdreht.

Im übrigen setzt das Bemühen, die radialen Schmierbohrungen zur Deckung zu bringen und so gefluchtet zu halten, eine Arretierung zwischen Bolzen und Hülse liegender Buchse voraus. Eine solche Arretierung hat aber einen einseitigen Verschleiß der Buchse beim Drehen während der Kettenumlenkung zur Folge. Eine arretierte Buchse muß daher viel früher als eine nicht arretierte Buchse ausgetauscht werden.

In einem Spannrahmen herrschen wie gesagt bei Betrieb hohe Temperaturen, so daß Fett - auch bei Verwendung von Spezialqualitäten - in den Lagern mit der Zeit verbraucht wird. Dieses verbrauchte Fett ersetzt werden. Es ist sehr schwierig, beim Einpressen des neuen Fetts festzustellen, ob die drei zur Deckung zu bringenden Gänge noch nicht auf einer Linie liegen und das Fett deshalb nicht in das Lager eindringt.

Um sicher zu sein, daß das neue Fett in das Lager eingedrungen ist, muß so lange neues Fett in die Nachfüllbuchse des Lagers eingepreßt werden, bis das Fett auf der anderen Lagerseite - an sich sinnlos - hervortritt. Dadurch ergibt sich der weitere Nachteil, daß das wegen der hohen Betriebstemperaturen im allgemeinen sehr teure Fett zum Teil verlorengeht.

Der Erfindung liegt die Aufgabe zugrunde, das Nachschmieren so zu vereinfachen, daß das aufwendige zur-Deckung-bringen mehrerer "Gänge" oder "Schalen" einschließlich des vorzeitigen Verschleißes der Buchsen entfällt und daß der Weg des Nachschmiermittels von der Einpreßstelle bis zum eingentlichen Lager im Sinne eines Vereinfachens des Einbringens und im Sinne einer Verminderung der jeweils gebrauchten Menge verkleinert wird.

Für die eingangs genannte Rollenkette mit einer auf jeder Hülse der Rollenkette in einem Kugellager drehbaren Laufrolle besteht die erfindungsgemäße Lösung darin, daß der Schmierkanal unmittelbar von außen durch eine der beiden Laschen des Innengliedes und durch einen an die Lasche angrenzenden, in Bezug auf die Innenlasche stillstehenden Dichtungsring des Kugellagers in das letztere führt.

Da der Dichtungsring des Kugellagers in Bezug auf die angrenzende Lasche bei Betrieb stillsteht, wird durch die Erfindung ein quasi einteiliger Schmierkanal geschaffen; ein Gegeneinanderverstellen verschiedener beweglicher Teile beim Schmieren ist also nicht mehr erforderlich. Zum Schmieren wird daher lediglich das neue Fett durch den erfindungsgemäßen Schmierkanal in Richtung auf das Kugellager gepreßt und die Bedienungsperson kann sicher sein, daß das eingedrückte Fett nicht in ungewollte Räume eindringt.

Da der erfindungsgemäße Schmierkanal bei Betrieb nicht durch gegeneinander bewegliche Teile gesperrt werden kann, wie das bei dem durch das Zentrum des Bolzens führenden Schmierkanal möglich war, ist es gemäß weiterer Erfindung als Schutz gegen Eindringen von Schmutz oder gegen ein Ausfließen des Fetts vorteilhaft, wenn ein sich zwischen Innen- und Außenlasche um den Bolzen herum erstreckendes Federblatt dichtend über der Außenöffnung des Schmierkanals der Innenlasche zu arretieren ist. Ein solches ohnehin als federnder Ausgleich zwischen Hülsenlängsende und Bolzen bzw. Außenlasche eingelegtes Federblatt wird hiernach so ausgebildet und arretiert, daß es während des Schmierens beiseite geschoben, aber ungewollt nicht aus seiner Abdichtposition schwenken kann.

Anhand der schematischen Darstellung eines Ausführungsbeispiels werden Einzelheiten der Erfindung erläutert.

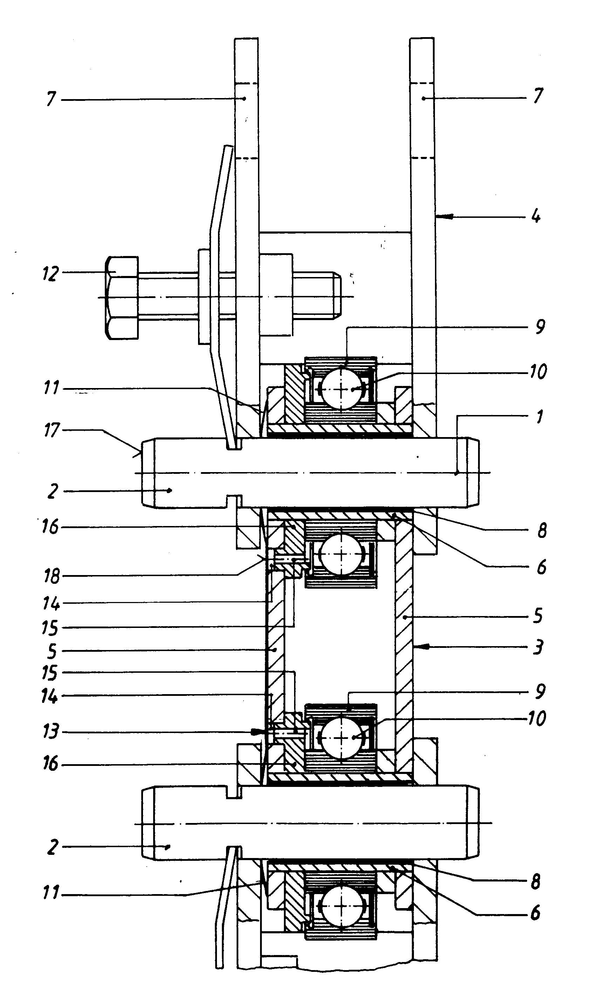

In der beiliegenden Zeichnung wird ein Teil einer Rollenkette in einem Schnitt senkrecht zur Laufrollenachse bzw. Längsachse 1 des Bolzens 2 schematisch dargestellt. Die Rollenkette besteht aus ingesamt mit 3 bezeichneten Innengliedern und insgesamt mit 4 bezeichneten Außengliedern. Jedes Innenglied 3 besteht aus zwei Innenlaschen 5 sowie aus zwei die Laschen 5 miteinander verbindenden Hülsen 6. Jedes Außenglied 4 besteht aus zwei Außenlaschen 7 sowie aus zwei die Außenlaschen 7 miteinander verbindenden Bolzen 2. Jede Hülse 6 wird drehbar auf dem zugehörigen Bolzen 2 gelagert. Die erforderliche Relativdrehbarkeit von Bolzen 2 und Hülse 6 wird gewährleistet durch eine zwischengesetzte Gleitbuchse 8, z. B. aus Polytetrafluorethylen-Gewebe.

Außen auf der Hülse 6 wird eine Laufrolle 9 in einem von außen zu schmierenden Kugellager 10 drehbar gelagert. Ein zwischen Außenlaschen 7 und Innenlaschen 5 am Bolzenumfang für eine freie Beweglichkeit erforderliche Spiel wird mit Hilfe eines Federblatts 11 elastisch aufgefangen. An der Rollenkette, vorzugsweise an den Laschen 7 der Außenglieder 4, werden (nicht gezeichnete) Nadel- oder Kluppenglieder zum Festhalten eines Stoffbahnrandes mit Hilfe einer durch einen Schraubbolzen 12 symbolisierten Vorrichtung befestigt.

Die in dem Kugellager 10 drehbare Laufrolle 9 läuft bei Betrieb an einer Schiene am Längsrand des Behandlungsraums der Spannmaschine ab. Bei Transportgeschwindigkeiten von 50 bis 200 m pro Minute und Rollendurchmessern von beispielsweise 8 cm ergeben sich erhebliche Umdrehungsgeschwindigkeiten der Rolle 9, so daß ständig für eine ausgezeichnete Schmierung des Kugellagers 10 zu sorgen ist.

Erfindungsgemäß wird zum Nachschmieren des Kugellagers 10 ein insgesamt mit 13 bezeichneter Schmierkanal vorgesehen, der aus einer ersten Bohrung 14 der Innenlasche 5 und einer daran anschließenden zweiten Bohrung 15 eines Dichtungsrings 16 des Kugellagers 10 besteht. Der Dichtungsring 16 ist im allgemeinen einteilig an die Hülse angeformt. Im gezeichneten Ausführungsbeispiel verläuft der Schmierkanal 13 parallel zur Längsachse 1 des Bolzens 2. Es können - wegen der besseren äußeren Zugänglichkeit - aber auch Schrägverläufe in der Lasche 5 und/oder im Dichtungsring 16 vorgesehen werden. Um dann gut durchgängige Übergänge zu erhalten, werden Neigungen von bis zu 45° gegen die Längsachse 1 bevorzugt.

Da der aus den Bohrungen 14 und 15 zusammengesetzte Schmierkanal 13 einen faktisch einteiligen Durchgang bildet, der von der Außenseite der Innenlasche 5 aus direkt in das Innere des Kugellagers 10 führt, bereitet es keine Schwierigkeiten, neues Fett in das Kugellager einzutreiben.

Da der erfindungsgemäße Schmierkanal mit seiner durchgehenden Bohrung auch eine ständige Öffnung zum Innern des Kugellagers 10 darstellt, wird bevorzugt vorgesehen, ein sich zwischen Innen- und Außenlasche 5, 7 um den Bolzen 2 herum erstreckendes Federblatt 11 dichtend über die Außenöffnung 18 des Schmierkanals 13 so an der Innenlasche 5 arretierend auszubilden, daß das Federblatt 11 während des Schmierens leicht beiseite geschoben aber ungewollt nicht aus seiner Abdichtposition wegschwenken kann.

### Bezugszeichenliste

- 1: = Rollenachse
- 2: = Bolzen
- 3: = Innenglied
- 4: = Außenglied
- 5: = Innenlasche
- 6: = Hülse
- 7: = Außenlasche
- 8: = Gleitbuchse
- 9: = Laufrolle
- 10: = Kugellager
- 11: = Federblatt
- 12: = Schraubbolzen
- 13: = Schmierkanal
- 14: = erste Bohrung
- 15: = zweite Bohrung
- 16: = Dichtungsring
- 17: = Längsende (2)
- 18: = Schmierkanaleingang

## Patentansprüche

1. Rollenkette zum kontinuierlichen Führen und/oder Breitstrecken einer textilen Stoffbahn in einer Stoffbahnspannmaschine mit verbunden über Kettengelenke abwechselnd aufeinanderfolgenden Innen- und Außengliedern (3, 4), wobei jedes Innenglied (3) aus zwei Innenlaschen (5) sowie zwei die Laschen (5) miteinander verbindenden Hülsen (6) und jedes Außenglied (4) aus zwei Außenlaschen (7) sowie zwei die Außenlaschen (7) miteinander verbindende Bolzen (2) besteht, wobei jede Hülse (6) drehbar auf dem zugehörigen Bolzen (2) gelagert ist und wobei außen auf der Hülse (6) eine Laufrolle (9) in einem über einen Schmierkanal von außen zu schmierenden Kugellager (10) drehbar gelagert ist,
**dadurch gekennzeichnet,**
daß der Schmierkanal (13) unmittelbar von außen durch eine der beiden Laschen (5) des Innenglieds (3) und durch einen an die Lasche (5) angrenzenden, in Bezug auf die Innenlasche (5) stillstehenden Dichtungsring (16) des Kugellagers (10) in das letzere führt.

2. Rollenkette nach Anspruch 1,
**dadurch gekennzeichnet,**
daß ein sich zwischen Innen- und Außenlasche (5, 7) um den Bolzen (2) herum erstreckendes Federblatt (11) dichtend über der Außenöffnung (18) des Schmierkanals (13) der Innenlasche (5) zu arretieren ist.

3. Rollenkette nach Anspruch 1 oder 2,
**dadurch gekennzeichnet,**
daß der Schmierkanal (13) als bis zu etwa 60°, vorzugsweise bis zu 45°, geneigt zu der Achse des Bolzens (2) verlaufende Bohrung von Lasche (5) und Dichtungsring (16) ausgebildet ist.

## Claims

1. Roller chain for continuously guiding and/or stretching in width a textile web in a web stretching machine, comprising successively alternating inside links and outside links (3, 4), connected together by chain articulations, wherein each inside link (3) consists of two inside straps (5) and two sleeves (6) connecting the straps (5) together and each outside link (4) consists of two outside straps (7) and of two pins (2) connecting the outside straps (7) together, wherein each sleeve (6) is rotatably journalled on the associated pin (2) and wherein a running roller (9) is rotatably journalled externally on the sleeve (6) in a ball bearing (10) to be lubricated from outside via a lubrication duct, characterized in that the lubrication duct (13) leads directly from outside, through one of the two straps (5) of the inside link (3) and through a sealing ring (16) of the ball bearing (10), which is adjacent to the strap (5) and is stationary relative to the inside strap (5), into the ball bearing (10).

2. Roller chain according to Claim 1, characterized in that a spring leaf (11), extending between inside and outside straps (5, 7) around the pin (2), can be sealingly fixed over the external opening (18) of the lubrication duct (13) of the inside strap (5).

3. Roller chain according to Claim 1 or 2, characterized in that the lubrication duct (13) is formed as a bore through the strap (5) and sealing ring (16), inclined at up to 60°, preferably up to 45°, to the axis of the pin (2).

## Revendications

1. Chaîne de rame pour le guidage et/ou la mise à largeur en continu d'un pan d'étoffe textile dans une rame continue pour pan d'étoffe, à organes intérieur et extérieur (3, 4) successifs disposés en alternance reliés par des articulations à chaînes, chaque organe interne (3) se composant de deux attaches intérieures (5) ainsi que de deux douilles (6) reliant entre elles les attaches (5) et chaque organe extérieur (4) se composant de deux attaches extérieures (7) ainsi que de deux goujons (2) reliant entre elles les attaches extérieures (7), chaque douille (6) étant logée à rotation sur le goujon associé (2) et un galet de roulement (9) étant logé à rotation à l'extérieur sur la douille (6) dans un roulement à billes (10) à lubrifier de l'extérieur dans un canal de lubrification,
**caractérisée en ce que**
le canal de lubrification (13) conduit immédiatement de l'extérieur dans le roulement à billes (10) à travers l'une des deux attaches (5) de l'organe intérieur (3) et à travers une bague d'étanchéité (16) du roulement à billes (10) adjacente à l'attache (5), fixe par rapport à l'attache intérieure (5).

2. Chaîne de rame selon la revendication 1,
**caractérisée en ce que**
un ressort à lames (11) s'étendant autour du goujon (2) entre les attaches intérieure et extérieure (5, 7) doit être bloqué de façon étanche au-dessus de l'orifice extérieur (18) du canal de lubrification (13) de l'attache intérieure (5).

3. Chaîne de rame selon la revendication 1 ou 2,
**caractérisée en ce que**
le canal de lubrification (13) est réalisé sous forme d'un alésage ménagé dans l'attache (5) et la bague d'étanchéité (16), et de tracé incliné, d'environ 60° au maximum, de préférence de 45° au maximum, par rapport à l'axe du goujon (2).
